Europäisches Patentamt

European Patent Office

Office européen des brevets

(19)

(11) Numéro de publication: **0 319 375 B1**

(12) **FASCICULE DE BREVET EUROPEEN**

(45) Date de publication de fascicule du brevet: **26.01.94**

(51) Int. Cl.⁵: **G01J 3/46**, G01N 21/47

(21) Numéro de dépôt: **88402943.0**

(22) Date de dépôt: **24.11.88**

(54) **Appareil pour déterminer la formulation de peinture pour réparation de carrosserie.**

(30) Priorité: **30.11.87 FR 8716601**

(43) Date de publication de la demande:
**07.06.89 Bulletin 89/23**

(45) Mention de la délivrance du brevet:
**26.01.94 Bulletin 94/04**

(84) Etats contractants désignés:
**DE ES FR GB IT NL**

(56) Documents cités:
**EP-A- 0 079 517     CH-A- 486 692
DE-B- 2 313 528     DE-U- 8 417 621
US-A- 3 910 701     US-A- 4 653 014**

**"Farbenlehre und Farbenmessung", Werner
Schultze, Springer Verlag, 1966, pp. 66-69**

**"Principles of Color Technology", Billmeyer,
Soltzmann, John Wiley & Sons, US, 1981, pp.
165-167**

(73) Titulaire: **WURTZ
26, rue Wurtz
F-75013 Paris(FR)**

(72) Inventeur: **David, Michel
26 Rue Wurtz
75013 Paris(FR)**

(74) Mandataire: **Joly, Jean-Jacques et al
Cabinet Beau de Loménie
158, rue de l'Université
F-75340 Paris Cédex 07 (FR)**

## Description

La présente invention concerne un appareil pour déterminer une formulation de peinture pour carrosserie, en particulier pour carrosserie de véhicules automobiles, afin de déterminer automatiquement la formulation à utiliser lorsque des réparations de carrosserie demandent l'exécution de travaux de peinture.

Dans une série de modèles de véhicules automobiles, les différentes couleurs de carrosserie sont référencées et à chaque référence correspond une formule donnée par le fabricant de peinture. Toutefois, lorsque des travaux de peinture doivent être effectués suite à des réparations, il est pratiquement toujours nécessaire de modifier la formule pour que la partie de carrosserie repeinte ne se distingue pas du reste de la carrosserie. Une première raison tient à ce que la couleur de la carrosserie a évolué dans le temps. Une autre raison tient au fait que des différences de teintes sont inévitables entre des peintures btenues par la même formule lorsque les produits de base utilisés proviennent de fabrications différentes

En pratique, la modification de la formule est effectuée au jugé, et demande souvent bien des tâtonnements accompagnés d'essais sur des plaques de tôle, sans toujours parvenir à un résultat totalement satisfaisant.

Il existe bien des photospectromètres qui fournissent automatiquement la bonne formulation pour reproduire une couleur donnée à partir d'un ensemble de bases. Il s'agit toutefois d'appareils très coûteux. De plus, de tels appareils ne sont guère adaptés à l'application ici envisagée, en particulier lorsque la couleur à reproduire doit être analysée par introduction dans l'appareil d'une plaque de cette couleur.

On connait également les articles de W. SCHULTZE "Farbenlehre und Farbenmessung" et de F. BILLMEYER et M. SALTZMAN "Principles of color technology" qui décrivent chacun une méthode de mesure de couleur basée pour l'une sur l'utilisation de grandeurs colorimétriques que sont les composantes X,Y,Z de la CIE et pour l'autre sur la détermination de la densité optique d'extinction d'un faisceau lumineux appliqué sur la couleur à analyser.

De même, la demande de brevet EP-A-0 079 517 montre un appareillage de réparation de carrosserie notamment automobile comportant un dispositif de mesure muni d'une tête de mesure destinée à être appliquée sur une partie de la carrosserie dont la couleur est à reproduire, des moyens d'éclairement pour éclairer la surface de ladite partie de carrosserie et au moins un récepteur pour recueillir la lumière réfléchie par ladite surface.

La présente invention a pour but de fournir un appareil permettant de déterminer automatiquement la formulation de peinture adéquate dans le cas de réparation de carrosserie, sans demander de tâtonnements, de coût bien inférieur à celui des spectromètres existants, et d'une utilisation particulièrement aisée pour pouvoir être employé sans difficultés dans un atelier de carrosserie.

Conformément à l'invention, un tel appareil utilisant un dispositif de mesure, comprenant une tête de mesure destinée à être appliquée sur une partie de carrosserie dont la couleur est à reproduire, des moyens d'éclairement pour éclairer la surface de ladite partie de carrosserie, au moins un récepteur pour recueillir la lumière réfléchie par ladite surface, et des moyens de mémorisation pour conserver en mémoire des informations relatives à un ensemble des teintes de base, caractérisé en ce qu'il comporte :

- des moyens d'enregistrement de formulations théoriques correspondant à des couleurs de références de carrosseries et combinant une ou plusieurs desdites bases,
- des moyens de calcul permettant à partir des informations relatives à l'ensemble des bases de calculer, pour chacune des longueurs d'onde prédéterminées du spectre visible, la réflectance obtenue avec une quelconque combinaison des teintes de base, et
- des moyens de comparaison pour chaque longueur d'onde des informations représentatives des réflectances calculées avec des informations représentatives de réflectances mésurées, obtenues par ledit dispositif de mesure à partir de la lumière réfléchie dans chaque longueur d'onde prédéterminée par ladite surface éclairée par des lumières ayant lesdites longueurs d'onde prédéterminées, pour rechercher la formulation de peinture à utiliser, par approximations successives, a partir d'une formulation théorique de départ donnée par la combinaison particulière de bases correspondant à la référence de couleur de la carrosserie à réparer, jusqu'à ce que la différence entre valeurs calculées et valeurs mesurées de réflectance soit minimale ou devienne inférieure à un seuil donné.

Une caractéristique originale de l'invention tient à ce que les combinaisons particulières de bases correspondant à des références de couleurs de carrosserie sont enregistrées, de sorte que la recherche de la formulation convenable pour réparer une carrosserie peut être effectuée à partir d'une combinaison de départ comprenant un nombre restreint de bases et relativement proche de la solution à trouver. Le processus est considérablement simplifié en comparaison avec les systèmes avec lesquels la recherche de la formulation convenable devrait être conduite parmi l'ensemble de toutes les bases possibles.

L'invention sera mieux comprise à la lecture de la description faite ci-après, en référence aux dessins annexés sur lesquels :

- la figure 1 est une vue très schématique d'un mode de réalisation d'un appareil selon l'invention, et
- la figure 2 illustre les étapes successives du processus de détermination automatique d'une formule de peinture.

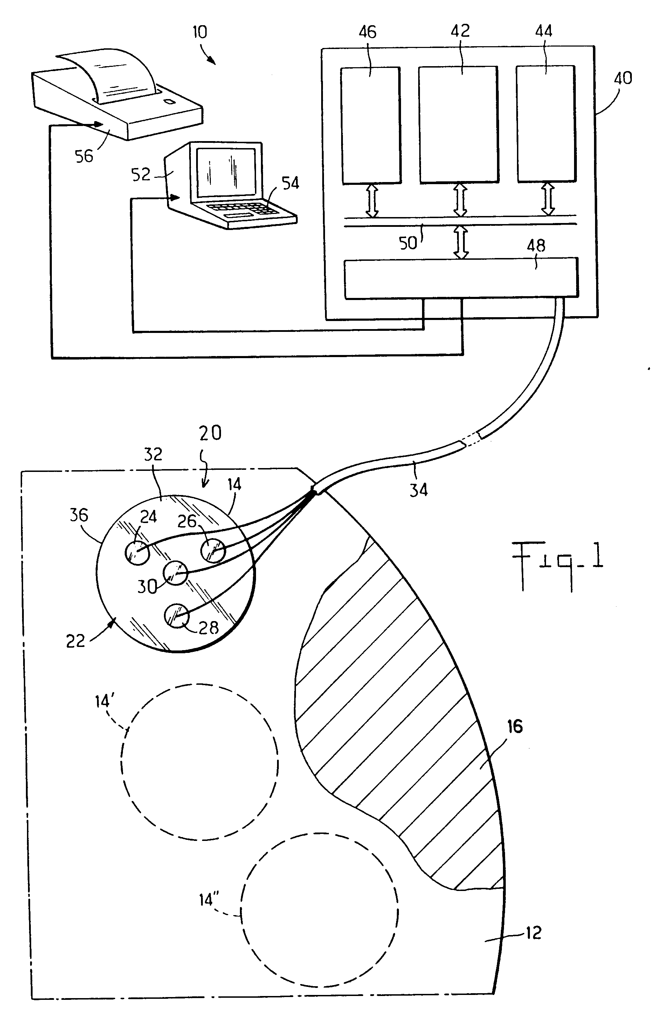

L'appareil 10 illustré par la figure 1 est destiné à être utilisé pour déterminer la formulation adéquate d'une peinture à utiliser dans le cas d'une réparation d'une partie d'une carrosserie 12, par exemple une carrosserie d'un véhicule automobile.

L'appareil 10 comprend essentiellement un dispositif 20 de mesure de réflectance, un dispositif 40 à microprocesseur et des périphériques tels qu'un tube à rayon cathodique ou terminal vidéo 52, un clavier 54 et une imprimante 56.

Le dispositif 22 de mesure de réflectance comprend plusieurs sources lumineuses 24, 26, 28 qui émettent dans le spectre du visible et un récepteur 30. Les sources 24, 26, 28 et le récepteur 30 sont montés sur une tête de mesure hémisphérique 32 (vue de dessus sur la figure 1). Le récepteur 30 est fixé au sommet de la tête 32 tandis que les sources 24, 26, 28 sont fixées en des emplacements répartis angulairement à intervalles réguliers autour de l'axe de la tête 32 et à une même distance du sommet de celle-ci. Les sources 24, 26, 28 sont par exemple constituées par des lampes au xénon. Trois filtres interférentiels (non représentés) centrés par exemple sur les longueurs d'onde 500 nm, 580 nm et 660 nm sont interposés entre les sources 24, 26, 28 et le récepteur 20, un filtre étant associé à chaque source, de manière à pouvoir effectuer des mesures de réflectance pour trois longueurs d'onde différentes du spectre visible. Le récepteur 30 comporte par exemple un photodétecteur qui délivre un signal représentatif de la quantité de lumière reçue dans chacune des longueurs d'onde.

Les sources 24, 26, 28 sont commandées séquentiellement par des signaux reçus du dispositif 40 à microprocesseur et les signaux délivrés par le récepteur 20 sont transmis à ce dispositif pour être convertis sous forme d'informations numériques représentatives de la quantité de lumière reçue.

Avantageusement, la tête de mesure est reliée au dispositif à microprocesseur par une liaison souple 34, ce qui permet d'amener la tête de mesure au contact de la carrosserie en toute partie désirée de celle-ci quelle que soit l'orientation. La tête hémisphérique 32 est appliquée contre la surface de la carrosserie par son bord circulaire 36, les faisceaux lumineux produits par les sources 24, 26, 28 étant dirigés du côté intérieur vers le centre de l'ouverture circulaire délimitée par le bord 36.

Le dispositif de mesure 22 est utilisé pour mesurer la réflectance de la surface de la carrosserie dans une zone peinte de celle-ci afin de déterminer la formulation de peinture convenable pour repeindre une autre partie de la carrosserie. Aussi, la mesure de réflectance est effectuée de préférence sur une zone peinte 14 proche de la partie à repeindre 16. De préférence, on effectuera des mesures de réflectances dans plusieurs zones 14, 14', 14″ situées autour de la partie 16 et l'on retiendra la moyenne des valeurs de réflectances mesurées pour les différentes longueurs d'onde.

Le dispositif 40 à microprocesseur comprend, de façon bien connue en soi, une unité centrale à microprocesseur 42, des mémoires mortes de programmes et de données permanentes 44, des mémoires vives de données 46, et des circuits d'entrées/sorties 48, ces différents éléments communiquant par des bus 50. Le dialogue entre le dispositif 40 et un opérateur est réalisé par l'intermédiaire de l'écran du terminal vidéo 52 associé au clavier 54. Une imprimante 56 permet l'édition d'informations, notamment les formulations de peintures déterminées.

Dans des mémoires mortes de données sont stockées des informations relatives à un ensemble de teintes de base, ou bases, destinées à permettre des calculs de réflectance pour des formulations de peinture consistant en toute combinaison d'un certain nombre de ces bases.

Ces informations consistent par exemple dans les valeurs K et S pour chaque longueur d'onde utilisée en mesure et pour chaque base, K et S étant respectivement le coefficient d'absorption et le coefficient de diffusion. En effet, la connaissance des valeurs K et S pour chaque base permet, pour chaque longueur d'onde considérée, le calcul de la réflectance d'une surface peinte avec une combinaison quelconque de ces bases, à l'aide de la formule de Duncan donnant le rapport K/S résultant :

$$\left(\frac{K}{S}\right)_{\lambda} = \frac{\sum\limits_{i=1}^{n} C_i K_i(\lambda)}{\sum\limits_{i=1}^{n} C_i S_i(\lambda)}$$

$\lambda$ étant la longueur d'onde considérée, n le nombre de bases, $C_i$ la concentration de la $i^{ème}$ base dans la formulation, $K_i(\lambda)$ la valeur de K pour la $i^{ème}$ base à la longueur d'onde $\lambda$ et $S_i(\lambda)$ la valeur de S pour la $i^{ème}$ base à la longueur d'onde $\lambda$. La réflectance R est donnée par :

$$R = 1 + \frac{K}{S} - \sqrt{\left(\frac{K}{S}\right)^2 + 2\frac{K}{S}}$$

La détermination de la formulation adéquate de peinture consiste, en partant de la formulation correspondant à la référence de couleur de la carrosserie, à modifier cette formulation de départ jusqu'à obtenir des valeurs de réflectance calculées sensiblement identiques aux valeurs de réflectance mesurées.

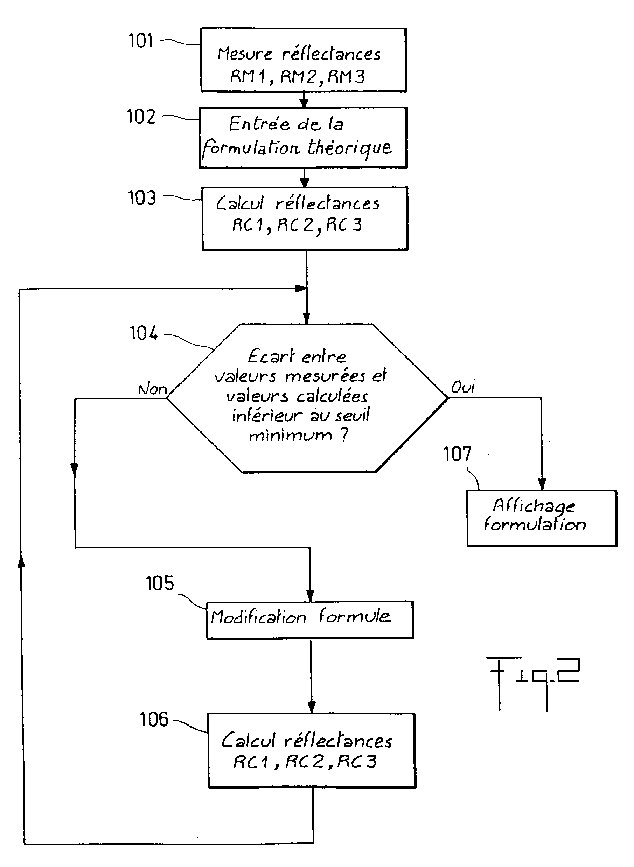

Différentes étapes successives de ce processus sont montrées par la figure 2.

Une première étape (phase 101) consiste à mesurer la réflectance de la carrosserie dans une zone peinte de celle-ci pour chaque longueur d'onde. Ceci est réalisé en activant successivement les trois sources 24, 26, 28, ce qui donne trois valeurs de réflectance mesurée RM1, RM2, RM3. Comme déjà indiqué, plusieurs mesures pourront être effectuées dans différentes zones situées autour de la partie de carrosserie à repeindre, la valeur de réflectance retenue pour chaque longueur d'onde étant la moyenne de celles obtenues dans les différentes zones pour cette longueur d'onde.

Une deuxième étape (phase 102) consiste à entrer la formulation théorique, c'est-à-dire la combinaison particulière de bases, correspondant à la référence de couleur de la carrosserie dont une partie est à repeindre. Cette formulation théorique, qui consiste dans l'identification des différentes bases utilisées et leurs propositions respectives, est fournie par un fabricant de peinture, en l'espèce celui fournissant les bases utilisées, pour chaque référence de couleur de carrosserie des véhicules sur le marché. La formulation théorique peut être entrée par l'utilisateur de l'appareil par action sur le clavier 54. En variante, les formulations théoriques pour un ensemble de références de couleurs de carrosseries peuvent être stockées dans des supports mémoires permanents électroniques (PROM) ou magnétiques (disquettes) amovibles qui permettent de les charger directement dans l'appareil. Dans ce dernier cas, une mise à jour des formulations par fourniture périodique, par le fabricant de peintures, de nouveaux supports mémoires peut être envisagée.

Une troisième étape (phase 103) consiste à calculer (ou lire si elles sont disponibles avec la formulation enregistrée) les valeurs de réflectance RC1, RC2, RC3 pour les différentes longueurs d'onde considérée, pour la formulation théorique correspondant à la référence de couleur de la carrosserie dont une partie est à repeindre.

Ensuite, les valeurs mesurées RM1, RM2, RM3 et calculées RC1, RC2, RC3 sont comparées.

Si nécessaire, en fonction du résultat de la comparaison (test 104), la formulation est modifiée soit en changeant les proportions relatives des bases de la formulation théorique, soit en ajoutant et/ou retranchant une ou plusieurs bases dans la formulation théorique. La modification de la formule de peinture (phase 105) peut être effectuée de façon manuelle. Au vu des écarts entre valeurs mesurées et calculées de la réflectance pour les différentes longueurs d'onde, l'opérateur introduit au moyen du clavier les modifications qu'il estime appropriées pour la formulation de peinture.

Les valeurs de réflectance pour la formule de peinture modifiée, sont calculées pour les différentes longueurs d'onde (phase 106) et substituées aux valeurs précédentes RC1, RC2, RC3 pour revenir à l'étape de comparaison avec les valeurs mesurées RM1, RM2, RM3.

Plusieurs modifications successives de la formule de peinture peuvent être ainsi effectuées jusqu'à ce que la comparaison entre les valeurs calculées et mesurées (test 104) indique que l'écart entre ces valeurs pour chaque longueur d'onde, est inférieur à un seuil minimum donné.

La formule de peinture ainsi déterminée peut alors être affichée à l'écran du terminal 52 (phase 107) et/ou éditée au moyen de l'imprimante 56.

On a envisagé ci-dessus une procédure de modification manuelle de la formule de peinture lorsque les écarts entre les valeurs mesurées et les valeurs calculées de la réflectance dépassent les seuils minima fixés.

Une procédure de modification automatique est également envisageable par mise en oeuvre d'un programme de simulation. Un tel programme consiste à faire varier par incréments, dans une limite préétablie, les concentrations des bases dans la formulation théorique puis à rechercher la formulation donnant des écarts minima entre valeurs mesurées et valeurs calculées de la réflectance pour les trois longueurs d'onde.

Dans le cas où les écarts minima ainsi déterminés sont supérieurs à un seuil prédéterminé, cette information peut éventuellement être donnée à l'utilisateur pour permettre à celui-ci de rechercher une meilleure formulation en ajoutant et/ou retranchant une ou plusieurs bases à la formulation théorique.

En outre, bien que l'on ait décrit un procédé utilisant des mesures et calculs de réflectance pour trois longueurs d'onde du spectre visible, on pourra se contenter de mesures et calculs pour deux longueurs d'onde différentes ou, au contraire, utiliser plus de trois longueurs d'onde différentes.

Le coût relativement peu élevé de l'appareil selon l'invention, sa facilité d'emploi et son adaptation à une utilisation en milieu industriel ressortent à l'évidence de ce qui précède.

L'enregistrement des formulations théoriques correspondant aux différentes références de couleurs de carrosserie et l'utilisation de ces formulations théoriques comme formulations de départ pour la recherche des formulations convenables apportent des avantages significatifs. En effet, le nombre de bases dans une formulation théorique correspondant à une référence de couleur est limité : par exemple au plus 8, et la formulation à rechercher n'est en général pas trop éloignée de le formulation théorique. Le processus de recherche est de ce fait relativement facile et rapide. Il en serait tout autrement s'il fallait rechercher la formulation convenable parmi l'ensemble de toutes les bases possibles (leur nombre peut être de plusieurs dizaines), sans point de départ particulier.

**Revendications**

1. Appareil pour déterminer la formulation de peinture à utiliser pour une réparation de carrosserie, comportant un dispositif de mesure (22) comprenant une tête de mesure (32) destinée à être appliquée sur une partie de carrosserie dont la couleur est à reproduire, des moyens (24, 26, 28) d'éclairement pour éclairer la surface de ladite partie de carrosserie, au moins un récepteur (30) pour recueillir la lumière réfléchie par ladite surface, et des moyens (40) de mémorisation pour conserver en mémoire des informations relatives à un ensemble des teintes de base, caractérisé en ce qu'il comporte :
   - des moyens d'enregistrement de formulations théoriques correspondant à des couleurs de références de carrosseries et combinant une ou plusieurs desdites bases,
   - des moyens (40) de calcul permettant, à partir des informations relatives à l'ensemble de bases de calculer, pour chacune de plusieurs longueurs d'onde prédéterminées du spectre visible, la réflectance (RC1, RC2, RC3) obtenue avec une quelconque combinaison des teintes de base, et
   - des moyens (40) de comparaison pour chaque longueur d'onde des informations représentatives des réflectances calculées (RC1, RC2, RC3) avec des informations représentatives de réflectances mésurées (RM1, RM2, RM3), obtenues par ledit dispositif de mesure à partir de la lumière réfléchie dans chaque longueur d'onde prédéterminée par ladite surface éclairée par des lumières ayant lesdites longueurs d'onde prédéterminées, pour rechercher la formulation de peinture à utiliser, par approximations successives, à partir d'une formulation théorique de départ donnée par la combinaison particulière de bases correspondant à la référence de couleur de la carrosserie à réparer, jusqu'à ce que la différence entre valeurs calculées et valeurs mesurées de réflectance soit minimale ou devienne inférieure à un seuil donné.

2. Appareil selon la revendication 1, caractérisé en ce que le récepteur (30) comporte un photodétecteur qui délivre un signal représentatif de la quantité de lumière reçue dans chacune des longueurs d'onde prédéterminées.

3. Appareil selon l'une quelconque des revendications 1 à 2, caractérisé en ce que le dispositif de mesure comporte plusieurs sources de lumière (24, 26, 28) montées avec le récepteur (30) sur ladite tête de mesure (32) reliée par une liaison souple (34) au reste de l'appareil.

4. Appareil selon l'une quelconque des revendications 1 à 3, caractérisé en ce que les moyens d'enregistrement de formulations théoriques comprennent des supports mémoires amovibles.

5. Appareil selon l'une quelconque des revendications 1 à 4, caractérisé en ce que le dispositif de mesure comporte plusieurs sources de lumière (24,26,28) associées à des filtres centrés sur lesdites longueurs d'onde prédéterminées et interposés entre les sources et ledit récepteur (30).

**Claims**

1. Apparatus for determining the paint formulation to be used in a bodywork repair, comprising a measuring device (22) provided with a measuring head (32) designed to be applied on one part of bodywork of which the color is to be reproduced, means (24, 26, 28) for lighting the surface of said bodywork part, at least one receiver (30) for picking up the light reflected by said surface, and storing means (40) for storing into a memory data relative to a set of the basic shades, characterized in that it includes:
   - means for recording theoretical formulations corresponding to bodywork color references and combining one or more of said bases,
   - calculation means (40) using the data relative to the set of bases, for calculating, for each one of a plurality of predetermined wavelengths of the visible spectrum, the reflectance (RC1, RC2, RC3) obtained with any combination of the basic shades, and

- means (40) for comparing, for each wavelength, data representing the calculated reflectances (RC1, RC2, RC3) with data representing the measured reflectances (RM1, RM2, RM3), obtained by said measuring device from the light reflected in each predetermined wavelength by said surface which is lit by lights having said predetermined wavelengths, in order to identify the paint formulation to be used, by continual approach, starting from an initial theoretical formulation given by the particular combination of bases corresponding to the color reference of the bodywork to be repaired, until the difference between calculated reflectance values and measured reflectance values reaches a minimum or becomes smaller than a given threshold.

2. Apparatus according to claim 1, characterized in that the receiver (30) comprises a photodetector which delivers a signal representing the quantity of light received in each predetermined wavelength.

3. Apparatus according to any one of claims 1 to 2, characterized in that the measuring device comprises a plurality of light sources (24, 26, 28) mounted with the receiver (30) on said measuring head (32) which is connected via a flexible connection (34) to the rest of the apparatus.

4. Apparatus according to any one of claims 1 to 3, characterized in that the means for recording theoretical formulations comprise portable storage means.

5. Apparatus according to any one of claims 1 to 4, characterized in that the measuring device comprises a plurality of light sources (24, 26, 28) associated with filters which are centered on said predetermined wavelengths and interposed between the sources and said receiver (30).

## Patentansprüche

1. Vorrichtung zum Bestimmen der Farbzusammensetzung zur Verwendung bei einer Karrosseriereparatur, mit einer Meßvorrichtung (22), die einen Meßkopf, der auf einen Karrosseriebereich, dessen Farbe zu reproduzieren ist, aufgebracht wird, Beleuchtungsmittel (24, 26, 28) zum Beleuchten der Oberfläche des Karrosseriebereichs und wenigstens einen Empfänger (30) zum Aufnehmen des von der Oberfläche reflektierten Lichts umfaßt, mit Speichermitteln (40) zum Speichern von auf einen Satz von Grundfarbtönen bezogenen Informationen, **gekennzeichnet** durch

Mittel zum Aufzeichnen theoretischer Zusammensetzungen, die Referenzkarrosseriefarben entsprechen und einen oder mehrere der Grundfarbtöne kombinieren,

Rechenmittel (40), die es anhand von auf den Satz von Grundfarbtönen bezogenen Informationen ermöglichen, für eine jede von mehreren vorgegebenen Wellenlängen des sichtbaren Spektrums das mit einer beliebigen Kombination von Grundfarbtönen erhaltene Reflexionsvermögen (RC1, RC2, RC3) zu berechnen, und

Vergleichsmittel (40) zum Vergleichen der die berechneten Reflexionsvermögen (RC1, RC2, RC3) wiedergebenden Informationen mit gemessenen Reflexionsvermögen (RM1, RM2, RM3) wiedergebenden Informationen, die durch die Meßvorrichtung anhand des Lichts mit vorgegebener Wellenlänge bestimmt werden, das von der mit Licht dieser vorgegebenen Wellenlängen beleuchteten Oberfläche reflektiert wird, um die zu verwendende Farbzusammensetzung, ausgehend von einer theoretischen Ausgangszusammensetzung, die durch die der Referenzfarbe der zu reparierenden Karrosserie entsprechende spezielle Grundfarbtonzusammensetzung gegeben ist, durch sukzessive Annäherung zu ermitteln, bis der Unterschied zwischen berechneten und gemessenen Werten des Reflexionsvermögens minimal ist oder kleiner wird als ein gegebener Grenzwert.

2. Vorrichtung nach Anspruch 1, dadurch gekennzeichnet, daß der Empfänger (30) einen Photodetektor umfaßt, der ein Signal erzeugt, das die bei jeder der vorgegebenen Wellenlängen empfangene Lichtmenge wiedergibt.

3. Vorrichtung nach einem der Ansprüche 1 oder 2, dadurch gekennzeichnet, daß die Meßvorrichtung mehrere Lichtquellen (24, 26, 28) umfaßt, die mit dem Empfänger (30) am Meßkopf (32) montiert sind, der durch eine biegsame Verbindung (34) mit dem Rest der Vorrichtung verbunden ist.

11 **EP 0 319 375 B1** 12

4. Vorrichtung nach einem der Ansprüche 1 bis 3,
dadurch gekennzeichnet,
daß die Aufzeichnungsmittel für theoretische Zusammensetzungen austauschbare Speicherelemente umfassen.

5. Vorrichtung nach einem der Ansprüche 1 bis 4,
dadurch gekennzeichnet,
daß die Meßvorrichtung mehrere Lichtquellen (24, 26, 28) umfaßt, die Filtern zugeordnet sind, die um die vorgegebenen Wellenlängen zentriert und zwischen den Quellen und dem Empfänger (30) angeordnet sind.

7

Fig-1

101 — Mesure réflectances
RM1, RM2, RM3

102 — Entrée de la
formulation théorique

103 — Calcul réflectances
RC1, RC2, RC3

104 — Ecart entre
valeurs mesurées et
valeurs calculées
inférieur au seuil
minimum ?

Non

Oui

107 — Affichage
formulation

105 — Modification formule

106 — Calcul réflectances
RC1, RC2, RC3

Fig.2